# EUROPEAN PATENT APPLICATION

(11) **EP 1 058 428 A1**
(43) Date of publication of application: **06.12.2000**
(21) Application number: 99110903.4
(22) Date of filing: 02.06.1999
(51) Int. Cl.: H04L 12/66, H04Q 7/32, H04N 7/24

(54) **Remote control system using a gateway station for multi-protocol conversion**

(71) Applicant: Beta Research GmbH, 85774 Unterföhring (DE)
(72) Inventor: TOTH, Gabor, 85774 Unterföhring (DE); GILLIES, David, 85604 Zorneding (DE)
(74) Representative: Heselberger, Johannes

(57) **Abstract**

An information exchange system comprising a plurality of control nodes (2) and a plurality of remote user terminals (1), said control nodes (2) being able to send and receive information by means of signals being formated according to a first standard protocol, said remote user terminals being able to send and receive information by means of signals being formated according to a second standard protocol being different from said first standard protocol, wherein said system further comprises a gateway station (4) receiving from said control nodes signals being formated according to said first standard protocol, converting said signals into converted first signals being formated according to said second standard protocol and sending said converted first signals to at least one of said remote user terminals (1), and receiving from said remote user terminals (1) signals being formated according to said second standard protocol, converting said signals into converted second signals being formated according to said first standard protocol and sending said converted second signals to at least one of said control nodes (2).

## Description

The object of the present invention is to provide a system and a method for information exchange.

Today there is a growing demand for controlling devices and functions, particularly at home, from a remote location. For example, many applicances are controlled via remote controls, e.g. television sets. Furthermore, answering machines may be checked from remote telephones or heatings may be turned on by means of a telephone call from a remote telephone.

One drawback of these prior art systems is their plurality. A user has to have an ever growing number of remote controls or remote access functions in order to gain and keep control of appliances or other devices many individuals possess. For example, remote controls exist in many households for television sets, video-cassette-recorders, stereos, garage door openers and car heatings. This variety of remote control systems is not coordinated and therefore is frequently considered to be more of a nuisance than a convenience.

Another drawback of the prior art systems is their limitation to very specific functions. For example, remote controls operating via telephone links merely allow to listen to the messages of an answering machine or to turn on the heating or to perform similar functions. Frequently, no bi-directional communication is possible. For example, an appliances operating system using telephone links may provide the possibility to turn on or off the heating, however, no information can be returned to the landlord enjoying his holidays abroad, such as the actual temperature or data about the condition or status of the heating. If this would be desired than an extra system would have to be installed, which would again undesirably increase the number of remote control systems.

Furthermore, the communication between a remote user and a device in his home is not facilitated by complex authentication mechanisms, which, in addition, vary from system to system. For example, if a user wants to receive the messages from his home phone he has to use a certain dial-in or authentication code, whereas if he desires to turn on his heating he is forced to use a different code.

The idea of combining remote control systems operating different devices regularly faces the obstacle of different technical concepts. Although it would be technically possible to overcome these obstacles it is, from a practical point of view, not feasible to provide means for the communication of individual devices belonging to different technical worlds, such as mobile phones and television sets.

Yet another drawback of prior art remote control systems is the difficulty in defining user groups for certain functions. For example, if only father and mother of a family should be allowed to turn on the heating via telephone they must share a password or authentification code to enact this function. If, however, all of the family members shall have the right to turn on the air conditioning via telephone all of the family members must share another password or authentification code. That means father and mother have to bear two passwords or codes in mind in order to be able to turn on the heating and control the air conditioning. The same applies with respect to the access to certain television programs. The standard remote control cannot limit the access of individuals to certain programs or functions once the individual is in physical possession of the remote control. The more functions exist with individual access the more burdensome the system becomes.

Therefore, the object of the present invention is to provide an information exchange system which allows the coordinated remote control of a variety of devices, particularly in the home environment.

The present invention relates to an information exchange system comprising a plurality of control nodes and a plurality of remote user terminals, said control nodes being able to send and receive information by means of signals being formated according to a first standard protocol, said remote user terminals being able to send and receive information by means of signals being formated according to a second standard protocol being different from said first standard protocol, wherein said system further comprises a gateway station receiving from said control nodes signals being formated according to said first standard protocol, converting said signals into converted signals being formated according to said second standard protocol and sending said converted signals to at least one of said remote user terminals, and receiving from said remote user terminals signals being formated according to said second standard protocol, converting said signals into converted signals being formated according to said first standard protocol and sending said converted signals to at least one said control node.

The present invention provides the possibility that remote user terminals, such as mobile phones, communicate with control nodes, such as television sets or set top boxes for satellite communication. A set top box is an electronic device which is traditionally located on top of a TV set or VCR and controls the or some of their functions. The typical use of set top boxes is in pay-TV applications, where the set top box controls the admission of the user to certain programs or movies or the like. The above addressed communication is made possible by a gateway station which is able to convert signals formated in different protocols. This conversion will regularly be effected by conversion software. The gateway station allows the quasi-direct communication between devices using different signal formats.

Control nodes include every device that controls or actuates a function or another device actuating or monitoring a function. Examples for control nodes are set top boxes for controlling TV-sets in a pay-TV application, wherein the set top boxes are controlled via digital communication links, particularly via satellites or cable networks. Other examples include video-cassette-recorders, stereos, house functions like heating, air conditioning, light, blinds, garage door and garden watering, and appliances like refrigerators, stoves and coffee machines. However, the control nodes may also be central managing devices which manage the operation or status of the above described house functions and the like, so that the latter are mere peripheral devices controlled by the control node.

The control nodes are able to communicate over wide distances with the gateway station. This communication may be effected via a telephone network, an electric network, a TV network or any kind of satellite or radio connection. The communication between the gateway station and the control nodes is effected by signals using a first standard protocol, e.g. DVB MPEG datastream. This communication will regularly be a two-way communication, but it can, for certain applications, also be a one-way exchange of information. It is also possible, that for sending signals from the gateway station to the control node and for receiving signals from a remote user terminal to the gateway station different communication means are employed.

The gateway station will regularly be a centrally located station which can send signals to the control nodes and receive signals from these devices. Such signals may contain any kind of useful or interesting information. For example, the gateway station may receive from a TV-set as a control node a program guide. This program guide is transmitted to the gateway station in order to be forwarded to a remote user terminal. Or, the gateway station sends a signal to the control node indicating a desired living room temperature. Then the control node actuates the heating or air conditioning in order to obtain this temperature. The return communication may be information about the present living room temperature or simply the signal as to the execution of the order.

The gateway station may pass such information on to a remote user terminal. The remote user terminals are devices which allow the remote monitoring or actuation of control nodes by a user. Examples for remote user terminals include telephones, in particular mobile phones, personal computers and radio controls. In the above example, the gateway station would pass on to the remote user terminal the actual living room temperature or, as expressed above, simply the information whether the order to arrive at a certain living room temperature has already been carried out. The communication between the gateway station and the remote user terminals is effected by signals formated in a second standard protocol, which is different from the first standard protocol. One example for the second standard protocol is the short message service SMS. This communication may be effected via any kind of radio or satellite link or via telephone, electric or TV networks. The remote user terminals have suitable display means for informing the user about information which has arrived and further have suitable input means to allow the user to enter and send signals representing information, like orders or messages.

Preferably said remote user terminals employ telephone links for sending signals to and receiving signals from said gateway station. Such telephone links may or may not be wireless, including mobile phone pathways.

As already described above, using the telephone network is one possibility for the communication between the remote user terminals and the gateway station. It offers vast possibilities of analog or digital communication and is well developed in most of the countries of the world. Moreover, portable telephones are available for the user at almost any location and in almost any situation. This does not mean, that the whole distance must be achieved with telephone or particularly mobile phone networks. But at least a major part of this connection is preferably effected via telephone networks. For this purpose, the remote user terminal needs to have a connection to a telephone network, for example it must include a stationary or mobile telephone or a PC with a modem-connection.

Preferably said control nodes employ TV distribution means for sending signals to and receiving signals from said gateway station.

It is possible to use TV distribution means, that means any kind of TV networks, for sending and receiving signals between the control nodes and the gateway station. This is preferred, since a TV set and the corresponding TV network connection is available almost in every household, so that communication can be effected through existing and reliable channels. TV networks include TV cable networks as well as satellite or aerial antenna links. These channels may be used bi-directionally.

Preferably said remote user terminals include telephones with a display and the control nodes include programmable signal receivers.

The telephone with a display is a comfortable solution to guide the user through the different possibilities of this system. For example, a program guide provided by the home TV set may be shown on the display of the telephone, so that the user may choose among a variety of options for programming his home VCR. The control nodes preferably include programmable signal receivers, for example a set top box for a TV set or the VCR. In the given example, the receiver may be programmed to actuate the VCR such that it records certain movies, that means that it is turned on and off one or several times. Another example for a programmable signal receiver is the control device for the home heating or air conditioning which can be programmed to follow certain orders from a certain remote user terminal or from a certain group of remote user terminals.

Preferably said telephones and said gateway station exchange information by using the short-message-service (SMS).

These SMS messages are an example for the second standard protocol. Messages with this protocol could be easily created on a mobile phone. The message could be created by the user himself or by employing a special software.

Preferably said telephones and said gateway station exchange information by using speech or sound messages.

It is also possible that remote user terminals employ another standard protocol such as a special format of speech messages or sound messages. If the system uses the sound or speech message format the gateway station has to have a sound or speech recognition system, respectively, to identify the meaning of this message and to convert this meaning into the format of the first standard protocol.

Preferably said gateway station comprises means for selectively assigning said remote user terminals to said control nodes.

If there is more than one control node and/or more than one remote user terminal, the gateway station preferably takes over the function of an assigning station, so that signals are directed to the correct devices. The gateway station provides the possibility to assign, for example, a number of remote user terminals, wherein each such device may correspond to a user, to a certain group of control nodes. In a practical example, all members of a family are granted access to a group of control devices like heating and air conditioning, while only adult members have access to certain TV programs, i.e. to certain functions which may be performed by control devices. The gateway station, therefore, allows to individualize the access and control rights of users to control nodes and the functions controlled by them. Preferred gateway station has such assignment and control function.

Preferably each off said control nodes employs an individual SmartCard for the authentification of each control node towards said gateway station.

For effectively assigning control nodes or their functions to remote user terminals or, in particular, users, the control nodes each allow access only based on information stored in a SmartCard. It carries authentification information for the respective user which authenticates the user towards the gateway station. The gateway station can then connect the authentification information about the applying user with information about the user's rights stored in the gateway station. This allows the individual assignation of users to control devices adressed by a certain control node or their various functions.

It is particularly preferred to use a system for information exchange, wherein said remote user terminals include mobile phones, said mobile phones send signals to and receive signals from said gateway station via a mobile phone center, said control nodes include set top boxes, said set top boxes send signals to and receive signals from the gateway station via a TV service center, said set top boxes send signals to and receive signals from the TV service center via a satellite link and said TV service center sends signals to and receives signals from the mobile phone center via said gateway station.

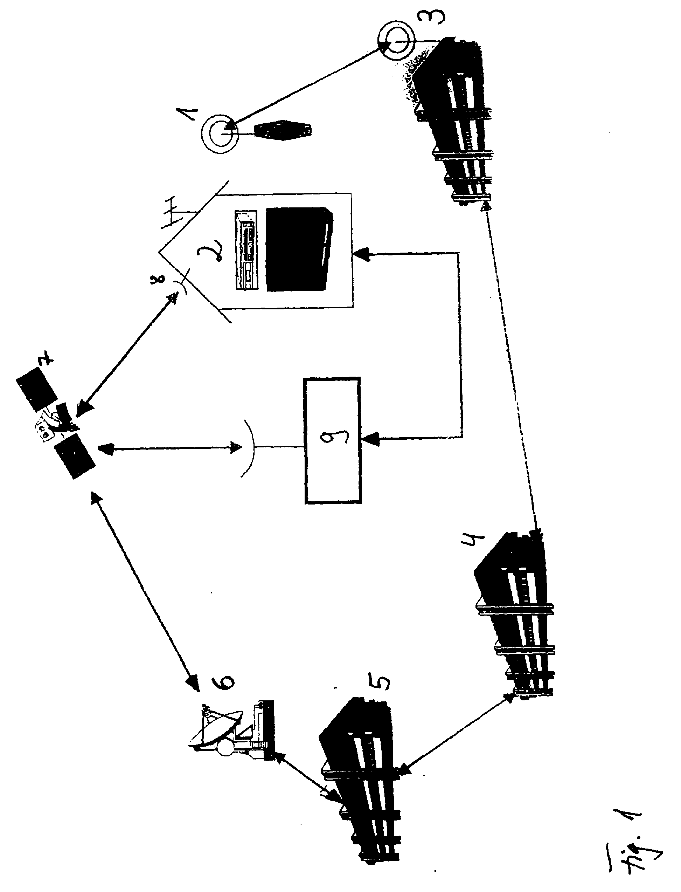

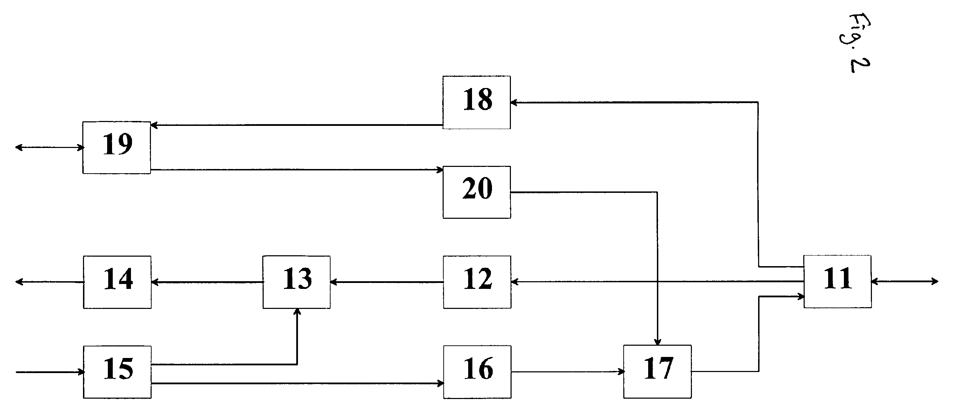

One example of the present invention is presented in Fig. 1 and 2, wherein
- Fig. 1: shows a diagram of communication between the members of an information exchange system according to the present invention, and
- Fig. 2: shows a functional diagram of a gateway station which may be used in the context of the present invention.

The remote user terminal 1, here a mobile phone, offers several functions to control the control node 2, here a set top box. First, the user of the mobile phone 1 selects a function of the set top box 2 in his menu on his mobile phone display. Software in the mobile phone generates a SMS message according to this function and sends this message via the mobile phone center 3 to the gateway station 4. This message is formated in a first standard protocol. The gateway station 4 controls the rights of the user employing the remote user terminal 1 and decides if the user is allowed to execute the desired function, for example turning on the VCR, at the specific control node 2. Then the gateway station 4 converts the information about the desired function, which forms part of the full SMS message, into signals which are formated according to a second standard protocol and sends the converted message via the TV service center 5, the antenna 6, the satellite 7 and the satellite receiver 8 to the set top box 2. Instead of providing a satellite receiver 8 it is also possible to feed the signal into the TV cable network 9 and thereby to the set top box 2. The set top box 2 executes the selected function, for example, turning on the VCR, generates a "carried out" message and sends this message via antenna 6 and TV service center 5 back to the gateway station 4. However, it is also possible, that the return signals are sent via another route to the gateway station 4, for example directly to the gateway station 4 or TV service center 5. The message is then converted into the SMS format and sent via the mobile phone center 3 to the desired mobile phone 1.

In Fig. 2 a functional diagram of the gateway station 4 of Fig. 1 is shown. Each information stream entering and leaving the station goes through means 11, 14, 15 and 19 with a transmission/reception and modulation/demodulation procedure as well as a channel processing stage which stands for example for error correction coding, framing/ deframing and other known actions. Afterwards in extraction and transforming means 12, 16, 18 and 20 an extraction of the data being relevant for the actual application is performed. In order to exploit these data on a different network it is necessary to re-format this data by transforming it. This transforming is the converting from a first standard protocol into a second standard protocol. For some applications there is a re-multiplexer 13 necessary to unite the extracted data with other data. In some cases it is important to employ a multiplexer 17 to send the data to different remote user terminals.

One function of the gateway station is to convert data entering the gateway station from a remote user terminal, such as a mobile phone, and leaving the gateway station to a control node, for instance a set top box. This data, which represents for instance the task to start the VCR at the user's home at a defined time, enters the gateway station via a mobile link and/or a PSTN/ISDN link. In the gateway station it goes through the reception/demodulation and channel processing part of means 11 via the extraction and transforming means 12 to the re-multiplexer 13. In the extraction and transforming means 12 the data from the mobile phone for instance formated as a SMS message is converted to an other format such as a DVB MPEG stream. At the same time broadcast data arriving from the TV service center enters the gateway station through the transmission/reception and channel processing means 15 to the re-multiplexer 13. This broadcast data is for example a film broadcasted by the TV service center via the gateway station to the set top box. In the re-multiplexer 13 these two data streams are united and sent via the modulation/transmission and channel processing means 14 to the actual control node. The control node forwards the data to the VCR, so that can start at the defined time.

Another way through the gateway station is the communication between the TV service center and the remote user terminal, here the above mentioned telephone. Within such a communication the TV service center sends for instance the user a program guide. The data from the TV service center enters the gateway station through the transmission/reception and channel processing means 15 and via the extraction and transforming means 16 and the multiplexer 17. It leaves the gateway station through the modulation/transmission and channel processing part of means 1. Such data from the TV service center could be for example formated with EPG.

If the broadcast path for example is not active or overloaded by TV services there is another way to reach the control node. This is the so-called interaction channel being discussed in the DVB scenario. This can be in a first primitive approach the fixed telephone line (PSTN) channel or, later-on, LDMS or CATV return and forward channels. To operate these it is necessary to equip the control node with a second tuner as well as a transmitter to interact with the service center or, as shown here, with the gateway station. Forward and return interaction channels are seen in future to be operated in similar frequency ressources as the broadcasting scenario has, but they are not restricted to them.

For the communication via these interaction channels the gateway station could provide also special means. If data should be sent from the remote user terminal to the control node via such an interaction channel, the data enters the gateway station through the reception/demodulation and channel processing part of means 11 and via the extraction and transforming means 18. It leaves the gateway system through the modulation/transmission and channel processing part of means 19. By communication in the other direction the data enters the gateway station through the reception/demodulation and channel processing part of means 19 and via the extraction and transforming means 20 and the multiplexer 17. It leaves the gateway station through the modulation/transmission and channel processing part of means 11.

The content of the data which has entered the gateway station could for example consist of information for controlling a set top box or a VCR via the set top box. This enables the SMS data to be used at quite another location. The same, of course, goes for the protocol transformation and data transportation from the set top box return channel to the mobile cellular network, informing the user for example about the status of his VCR at home.

Control means control the handling of the different transformation processes under the aspects of real time and collision free processing.

The gateway station is an essential function of this invention, regardless of the owner site. It is always implemented, because the data formats of the three networks "Broadcasting", "Interaction Channel" and "Mobile Cellular" are different by their nature and thus are not compatible.

## Claims

1. An information exchange system comprising a plurality of control nodes and a plurality of remote user terminals,
said control nodes being able to send and receive information by means of signals being formated according to a first standard protocol,
said remote user terminals being able to send and receive information by means of signals being formated according to a second standard protocol being different from said first standard protocol,
**characterized in that**
said system further comprises a gateway station receiving from said control nodes signals being formated according to said first standard protocol, converting said signals into converted first signals being formated according to said second standard protocol and sending said converted first signals to at least one of said remote user terminals, and receiving from said remote user terminals signals being formated according to said second standard protocol, converting said signals into converted second signals being formated according to said first standard protocol and sending said converted second signals to at least one of said control nodes.

2. A system according to claim 1, characterized in that said remote user terminals employ telephone links for sending signals to and receiving signals from said gateway station.

3. A system according to claim 1 or 2, characterized in that said control nodes employ TV distribution means for sending signals to and receiving signals from said gateway station.

4. A system according to any of the preceding claims, characterized in that said remote user terminals include telephones with a display and said control nodes include programmable signal receivers.

5. A system according to claim 4, characterized in that said telephones and said gateway station exchange information by using the short-message-service (SMS).

6. A system according to claim 4, characterized in that said telephones and said gateway station exchange information by using speech or sound messages.

7. A system according to any of the preceding claims, characterized in that said gateway station comprises means for selectively mutually assigning said remote user terminals and said control nodes.

8. A system according to any of the preceding claims, characterized in that each of said control nodes employs an individual SmartCard for the authentification of each control node towards said gateway station.

9. A system according to claim 1, characterized in that
- said remote user terminals include mobile phones,
- said mobile phones send signals to and receive signals from said gateway station via a mobile phone center,
- said control nodes include set top boxes,
- said set top boxes send signals to and receive signals from said gateway station via a TV service center, by a satellite link, and
- said TV service center sends signals to and receives signals from said mobile phone center via said gateway station.
